# EUROPEAN PATENT APPLICATION

(11) **EP 3 434 095 A1**
(43) Date of publication of application: **30.01.2019**
(21) Application number: 18181425.2
(22) Date of filing: 03.07.2018
(51) Int. Cl.: A01D 41/14, A01D 57/20

(54) **HEADER FOR A CROP HARVESTING MACHINE**

(30) Priority: 27.07.2017 CA 2974636
(71) Applicant: Macdon Industries Ltd., Winnipeg, Manitoba R3J 3S3 (CA)
(72) Inventor: Enns, John Edward, East St. Paul, Manitoba R2E 1A9 (CA); Jabal, Arvinder Singh, Winnipeg, Manitoba R2R 0Y9 (CA)
(74) Representative: Jostarndt Patentanwalts-AG

(57) **Abstract**

In a header for a crop harvester including two side drapers each a front edge adjacent the cutter bar and a feed draper including a feed draper belt, a front roller behind the cutter bar and parallel thereto and a rear roller with two side edges each adjacent a respective one of the side drapers there is provided a pair of edge seals for engaging a respective side edge of the feed draper belt each comprising a strip of a flexible material extending from a frame member adjacent the respective side edge to a position in engagement with the feed draper at or adjacent the side edge. The strip is distorted by an interference connection with the draper belt so as to follow sagging of the edge of the draper belt by flexing and is biased by a downturned flange of the mounting member into an interference connection with the draper belt.

## Description

This invention relates to a header for a crop harvesting machine which uses two side drapers for transferring the cut crop to a discharge opening and a feed draper between the two side drapers running rearwardly to carry the crop to an inlet of the machine. While typically the machine is a combine harvester, other types of harvesting machines can use the header, including a forage harvester.

### BACKGROUND OF THE INVENTION

Headers for a crop harvesting machine generally comprises a main longitudinal support member in the form of an elongate tube which extends across substantially the full width of the header frame and defines a main structural member for the header frame. The tube carries a plurality of forwardly and downwardly extending support beams which include a first portion extending downwardly and a second portion attached to a lower end of the first portion and extending forwardly therefrom toward a forward end of the support beams. The cutter bar is attached to the forward end of the support beams and is thus held thereby in a position generally parallel to the main support tube.

Many headers are of a type in which the cutter bar is intended to be in a fixed rigid position relative to the main support tube so that the cutter bar is not intended to flex or float relative to the main structural tube in response to changes in ground contour.

This rigid type of header has the advantage that it allows more accurate control of the position of the fingers or bats of the reel relative to the cutter bar so as to more accurately control the crop as it is swept onto the cutter bar and the table rearwardly of the cutter bar.

In this rigid header type, therefore, the support beams extending forwardly from the main structural tube are substantially rigid and hold the cutter bar in fixed position.

Alternative types of header mount the cutter bar for floating or flexing movement relative to the main structural support tube. This type of header is used to provide an improved action in following the contour of the ground and is advantageous in some circumstances. Thus when cutting crops right at the ground it is desirable that the cutter bar of larger headers, greater than of the order of 20 feet, is somewhat flexible to follow the ground contour.

In U.S. Pat. No. 4,956,966 (Patterson) issued September 1990 and assigned to the present Assignee is disclosed a header which includes two side drapers for transporting the crop inwardly from the sides of the header toward the central discharge section at which is located a feed draper to carry the crop rearwardly to a discharge opening. The use of drapers can provide an arrangement which allows the header table to flex although the arrangement shown in the patent and the product manufactured in accordance with the patent provides a rigid header of the type described above. The header of Patterson includes a central link by which the position of the upper end of the header can be pulled toward or released from the supporting vehicle so as to change the angle of the frame of the header about an axis across the width of the header. A skid plate can be provided just behind the cutter bar which can run across the ground so that the change in angle of the header changes the angle of the cutter bar in front of the skid plate.

Many subsequent patents show headers where a flexibility is provided allowing the cutter bar to follow the ground contour while the frame remains attached to the propulsion vehicle. This causes relative movement between the cutter bar, the side drapers and the feed draper which must be accommodated while properly transferring the crop from the cutter bar to the harvester.

The header also includes at the discharge end of the two side drapers a feed draper having a front roller behind the cutter bar and parallel thereto and a rear roller spaced rearwardly from the front roller so that crop discharged from the discharge end falls onto the feed draper to be carried rearwardly.

In this arrangement using a feed draper, typically the rear roller of the feed draper is mounted on the harvester for movement upwardly and downwardly relative to the cutter bar and the front roller to accommodate changes in position between the cutter bar and the harvester.

### SUMMARY OF THE INVENTION

According to a first aspect of the invention there is provided a header for a crop harvesting machine comprising:
a main frame structure extending across a width of the header for movement in a forward direction generally at right angles to the width across ground including a crop to be harvested;
a mounting assembly for carrying the main frame structure on the crop harvesting machine;
a cutter bar arranged to move over the ground in a cutting action and carrying a cutter knife operable for cutting the crop as the header is moved forwardly across the ground for depositing the crop onto the table;
two side drapers each including a draper belt mounted on rollers generally parallel to the forward direction so that the an upper run of the draper belt carries the crop transverse to the forward direction to a discharge end of the draper belt, with the draper belt having a front edge adjacent the cutter bar and a rear edge;
a feed draper including a feed draper belt, a front roller behind the cutter bar and parallel thereto and a rear roller spaced rearwardly from the front roller so that crop discharged from the discharge end of the side drapers falls onto the feed draper to be carried rearwardly;
the feed draper belt having two side edges each adjacent a respective one of the side drapers;
and a pair of edge seals for engaging a respective side edge of the feed draper belt each comprising a strip of a flexible material extending from a respective frame member adjacent the respective side edge to a position in engagement with the feed draper at or adjacent the side edge.

Preferably the strip is distorted by an interference connection with the draper belt so as to follow sagging of the edge of the draper belt typically caused by the load of the crop by flexing of the strip so that part is more distorted.

Preferably the strip is carried by a mounting member carried on or attached to on the adjacent frame member and is biased by the mounting member into an interference connection with the draper belt.

In one arrangement, the flexible strip comprises a flexible rubber coated fabric substrate which can be substantially similar to the rubber coated fabric substrate of the draper canvas. This is a suitable arrangement as the fabric is readily available, hard wearing and can be easily cut into the required dimensions.

Preferably the strip is simple in construction and has a first side edge and a second side edge defining a parallel band of material with the first side edge being oriented substantially parallel to the direction of movement of the feed draper.

Preferably the flexible strip is mounted on the adjacent frame member by a bracket mounted on the frame member, the bracket arranged such as by a row of bolts to secure the side edge of the flexible strip to the frame member.

Preferably the bracket includes an extension portion which extends toward the feed draper and is configured and operable such that the side edge of the flexible strip is biased by its engagement with the bracket into substantially continuous engagement with the upper conveyor surface of the feed draper canvas during movement. This provides a spring force in the strip which holds it in contact with the belt. That is preferably the bracket comprises an inner side portion that is configured to engage and be secured to the frame member, and an outer side portion that is angled downwardly toward the upper surface of the draper canvas to bias the edge of the flexible strip into engagement with the upper conveyor surface of the draper canvas.

However it is also possible for the strip to be merely clamped onto the frame member and for it to be shaped and formed out of the planar shape so that the strip itself provides the spring force against the belt. In this way the belt includes internal components as part of the structure which cause it to be deformed from a planar shape into a curved or downwardly distorted shape so that it is held against the belt by this shape.

Preferably the bracket comprises a simple elongate metal strip that extends the length of the adjacent frame member and secures the side edge of the flexible strip with a plurality of bolts. However other arrangements can be provided which include spaced members which provide only periodic connection to the strip or which include more complex components with spring portions or the like.

Preferably the frame member forms part of the frame structure on which the feed draper is mounted so that the flexible strip is supported at a nominally constant distance from draper edge, bearing in mind that the draper edge can and will move toward and away from the frame member as it sags under load.

Preferably the feed draper can move relative to a frame of the header on which the side drapers are carried and the frame member on which the flexible strip is mounted is mounted for common movement with the draper edge rather than with the frame carrying the side drapers where the frame member is mounted separately from the side drapers so that there is relative movement therebetween.

That is preferably the side drapers are attached to the header for movement therewith and the rear roller of the feed draper and the frame members are attached to the harvesting machine for movement therewith so that relative movement of the header and the machine causes relative movement of the feed draper and side drapers.

Preferably a portion of the flexible strip extends beyond the mounting across a surface of the frame member. This can act to reduce the loss of crop which can enter this space on top of the frame member.

Typically an endmost portion of the side draper projects beyond the side frame and overlies the edge of the feed draper.

### BRIEF DESCRIPTION OF THE DRAWINGS

One embodiment of the invention will now be described in conjunction with the accompanying drawings in which:
Figure 1 is a schematic rear elevational view of a conventional header for use with the combine harvester which acts as a propulsion vehicle, with the associated adapter and the reel being omitted for convenience of illustration, to place the present invention in context.
Figure 2 is a schematic top plan view of the header of Figure 1.
Figures 3 is a cross sectional view along the lines 3-3 of Figure 1 showing the outer end roller.
Figures 4 is a cross sectional view along the lines 4-4 of Figure 1.
Figure 5 is an isometric view of the feed draper only showing the seal arrangement of the present invention.
Figure 6 is a cross-sectional view along the lines 6-6 of Figure 5.

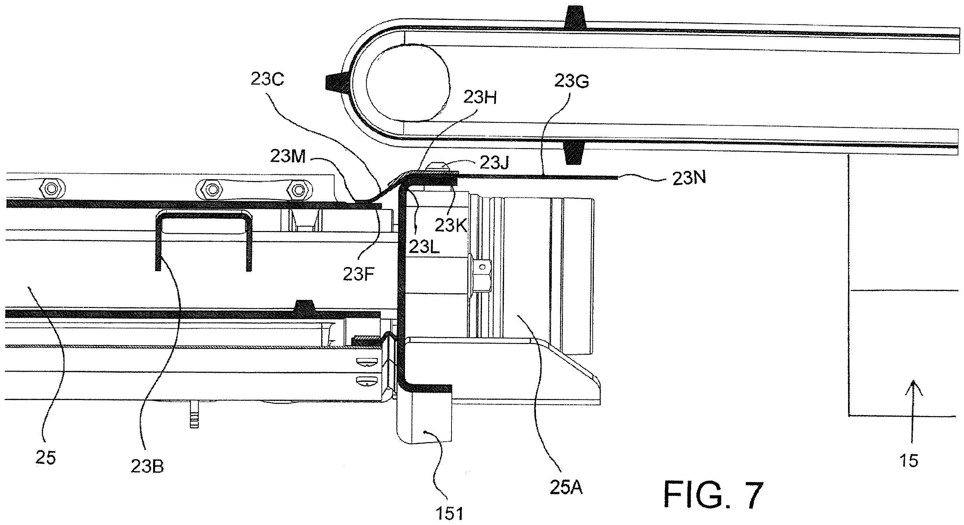

Figure 7 is an enlarged cross-sectional view along the lines 6-6 of Figure 5 showing the area of the seal.

### DETAILED DESCRIPTION

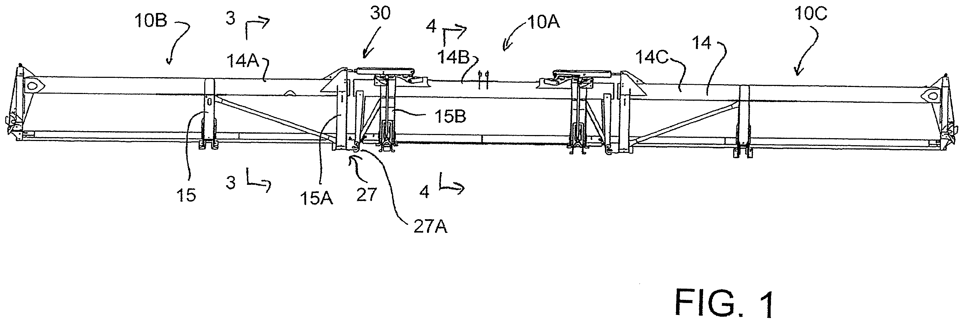

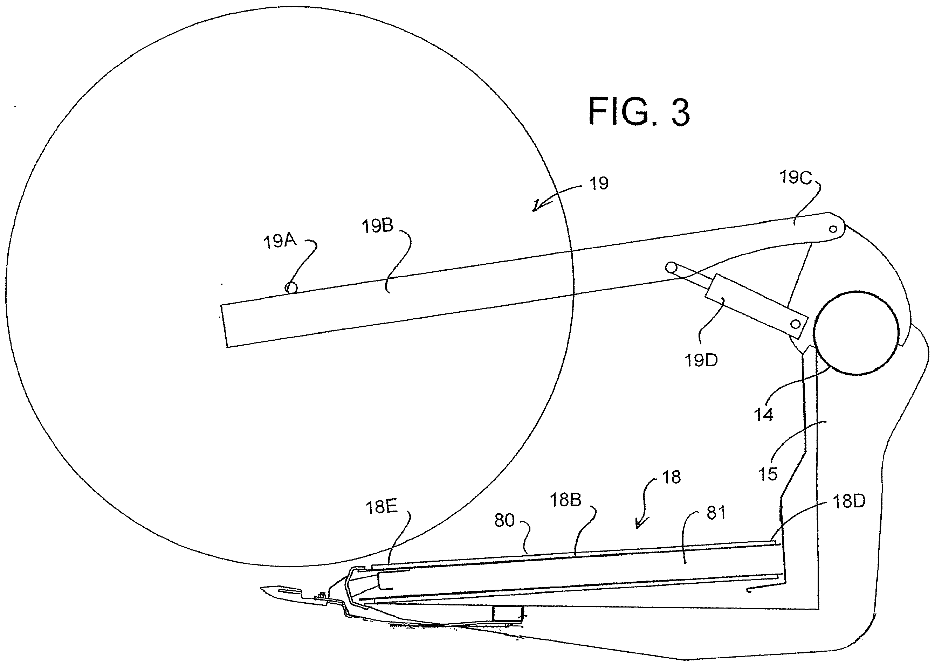

Figures 1, 2 and 3 show for the context of the present invention a conventional header 10 carried on an adapter 11 attached to the feeder house 12 of a combine harvester. In Figure 1 the adapter is omitted for convenience of illustration.

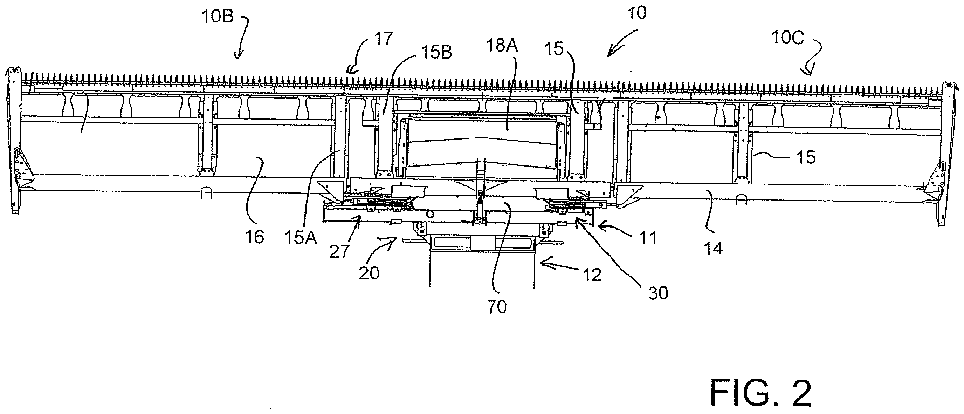

The header 10 includes a frame 13 defined by a main rear beam 14 and a plurality of forwardly extending arms 15 which extend downwardly from the beam 14 and then forwardly underneath a table 16 which extends across the header. At the forward end of the table 16 is provided a cutter bar 17. On top of the table 16 is provided a draper transport system 18 (not shown in Figures 1 and 2) which carries the crop from the cutter bar across the header to a discharge location at the feeder house 12. The draper thus include two side drapers extending from respective ends of the header inwardly toward the feeder house and a center adapter section which acts to feed the crop from the side drapers rearwardly to the feeder housing.

The header further includes a reel 19 including a beam 19A on which is mounted a plurality of reel bats (not shown) which are carried on the beam 19A for rotation with the beam around the axis of the beam. The beam is carried on reel support arms 19B which extend from the beam rearwardly and upwardly to a support bracket attached to the transverse main beam 14. The reel arms can be raised and lowered by hydraulic cylinders 19D connected between the respective arm and the beam 14.

The adapter 11 comprises a conventional construction well known from the prior art which comprises a frame 20 which attaches to the feeder house 12 and carries at its lower end a pair of forwardly extending pivotal arms (not shown) which extend forwardly underneath respective ones of the frame members 15 of the header. The pivotal arms can pivot upwardly and downwardly about a respective pivot pins each independently of the other arm. Each arm is supported by a respective spring carried on a respective stub arm attached to the respective arm. Thus the spring provides tension on the stub arm pulling it upwardly around the pin which acts to pull up the respective arm and provide a lifting force underneath the header at a lifting point partway along the respective frame member 15 and underneath the draper 18 and the table 16.

At the center of the adapter is provided a link 26 which extends from the frame 20 forwardly to the central bracket 19C of the beam arm support brackets. The link 26 is provided in the form of a hydraulic cylinder which allows adjustment of the length of the cylinder thus pivoting the header forwardly and rearwardly about the support point of the arms on the underside of the header. Thus the attitude of the header, that is the angle of the table 16 to the horizontal can be tilted by operation of the cylinder forming the link 26.

In addition the attitude of the header about an axis extending forwardly of the direction of movement that is at right angles to the transverse beam 14 is effected by the independent pivotal movement of the arms provided by the springs which act as a floatation system. In addition the whole header can float upwardly and downwardly on the springs with the link 26 pivoting to accommodate the upward and downward movement and the arms pivoting about the respective pin.

The header is formed in a number of sections which are independently pivotal each relative to the next and in which adjustment of the lifting force provided by the springs is transferred to each of the sections proportionally so that each section can float upwardly and downwardly and each section applies a force to the ground which is proportional to the total force of the whole header.

Thus the beam 14 is divided into a number of separate pieces 14A, 14B and 14C depending upon the number of sections of the header. In the embodiment shown there are three sections including a center section 10A, a first wing section 10B and a second wing section 10C. The center section 10A is mounted at the adapter so that the arms extend into engagement with the center section. The wing sections are pivotally connected to the center section such that each can pivot upwardly and downwardly about a respective pivot axis generally parallel to the direction of movement.

Thus the beam 14 is split into three portions each co-operating with a respective one of the sections 10A, 10B and 10C and defining a main beam therefor. Each section of the beam 14 includes respective ones of the frame members 15 which support the respective portion of the table. There is a break 14A between the beam sections 14 of the center section 10A and one wing section 10B. The end most frame member 15A of the wing section 10B is arranged at the break. The end frame member 15B of the center section 10A is spaced inwardly from the break leaving space for a pivot coupling 27 extending from the frame member 15A to the frame member 15B and defining a pivot pin lying on the pivot axis between the wing section 10B and the center section 10A.

The cutter is formed in a manner which allows it to flex on the axis of the pin 27A thus avoiding the necessity for a break in the cutter bar.

Thus the two sections 10A and 10B are supported each relative to the other for pivotal movement of the wing section 10B about an axis extending through the pin and through the cutter bar so that the wing section is supported at its inner end on the center section but can pivot downwardly at its outer end so that the weight at the outboard end is unsupported by the center section and causes downward or counter clockwise pivotal movement of the wing section 10B.

The wing section 10C is mounted in an identical or symmetrical manner for pivotal movement about the other end of the center section 10A. The amount of pivotal movement allowed of the wing section relative to the center section about the axis of the pivot pin is maintained at a small angle generally less than 6 deg. and preferably less than 4 deg. as controlled by suitable mechanical stop members which are provided at a suitable location with the required mechanical strength to support the wing frame section against upward or downward movement beyond the stop members.

The outboard weight of the wing section 10B is supported on a linkage which communicates that weight from the inner end of the beam 14 of the section 10B through to the support for the center section 10A at the springs. The linkage is shown and described in full detail in USP 6675568 and in USP 7918076 to which reference may be made or the disclosures of which are incorporated herein by reference.

In general the linkage operates to transfer the outboard weight of the wing section inwardly to the center section and at the same time to balance the lifting force provided by the springs so that it is proportionally applied to the center section and to the wing section.

The crop from the side drapers 18B is fed rearwardly to the feeder house by a feed draper 18A.

Underneath and behind the rear end of the feed draper 18A is provided a guide sheet or pan 50 which extends from the rear end of the draper rearwardly through a rear positon 59 behind the draper to a rear end 60 at the feeder house 12.

The feed draper 18A and the pan or guide sheet 50 are mounted on two parallel side arms (not shown) which extend to a rear end 60 of the pan 59 at which point the arms are pivoted to the feeder house. The front end of each arm is supported by the header on a cross member extending between the arms 15 at the forward end of the pan 59. The feed draper 18A includes a belt 23 mounted on front roller 24 which is mounted between the arms rearward of the cutter bar. The rear roller 25 of the draper is mounted between the arms rearward of the front roller. The pan 50 is mounted between the arms and extends from the rear feed draper roller to the front of the feeder house at the adapter 11. It is necessary for the arms, draper and pan 59 to flex and pivot to accommodate the floating and pivoting action of the header. The rear roller 25 of the draper 23 is thus mounted on the arms and therefore also the draper 23 flexes and twists to accommodate such movement.

The sheet 50 has a width substantially equal to the width of the draper 23 so that the material discharged from the draper across the full width of the draper is carried rearwardly over the sheet to the feeder house. The feed draper 18A is wider than the space between the side drapers 18B so that the feed draper extends underneath the side drapers to carry the crop therefrom and to reduce the possibility of crop back feeding underneath the side drapers.

The movement of the crop material to the feeder house is assisted by a rotary feed member 70 carried above the sheet 50 with a width substantially equal to the width of the sheet 50. The rotary feed member 70 includes a drum 71 which carries on its outside surface two helical auger sections 72 arranged at respective ends of the drum and arranged so that rotation of the drum in a counter clockwise direction so as to carry the crop material underneath the rotary feed member across the sheet 50 causes the crop material at the side edges of the sheet to be drawn inwardly toward a center of the sheet.

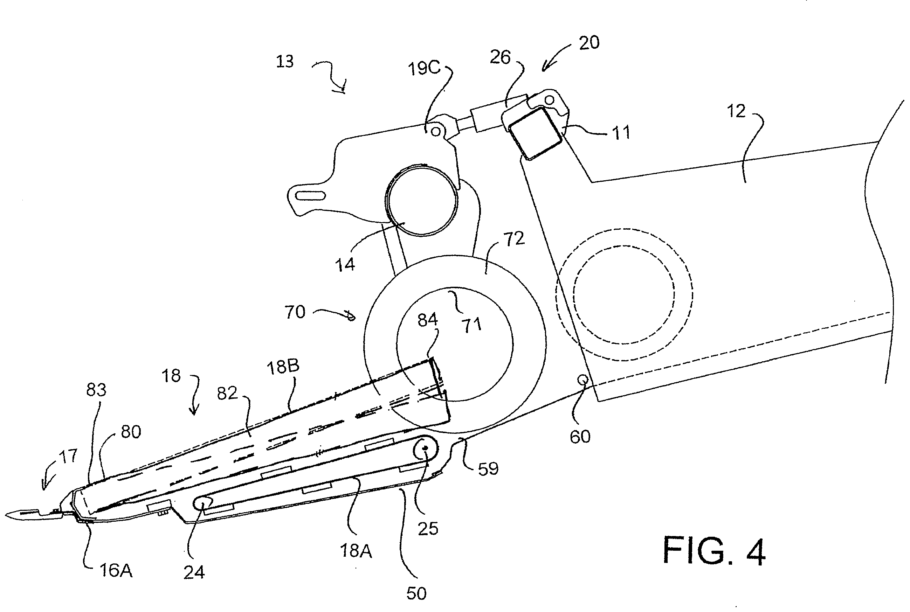

Turning now to Figures 4 to 6, the arrangement with which the present invention is concerned is shown in more detail and relates to the feed draper 18A mounted on the adapter 11 .

This feed draper 18A is located between the side drapers 18. Each of the side drapers includes a belt 80 mounted on rollers 81 and 82 generally parallel to the forward direction including an outer end roller 81 and an inner end roller 82 at the feed draper 18A so that the an upper run of the draper belt 80 carries the crop transverse to the forward direction to the discharge end of the draper belt. The draper belt 80 has a front edge 83 adjacent the cutter bar and a rear edge 84 adjacent the rear wall of the header. An endmost portion 80A of the side draper 80 projects beyond the side frame and overlies the edge of the feed draper 23.

The side drapers are mounted on the header frame by way of a deck 15P carried on the arms 15 for floating movement of the side drapers with the header frame. This movement takes place relative to the adapter and particularly the rear end of the adapter 11 and the pan 59 which remains fixed at rear end pivot 60 to the feeder house of the combine.

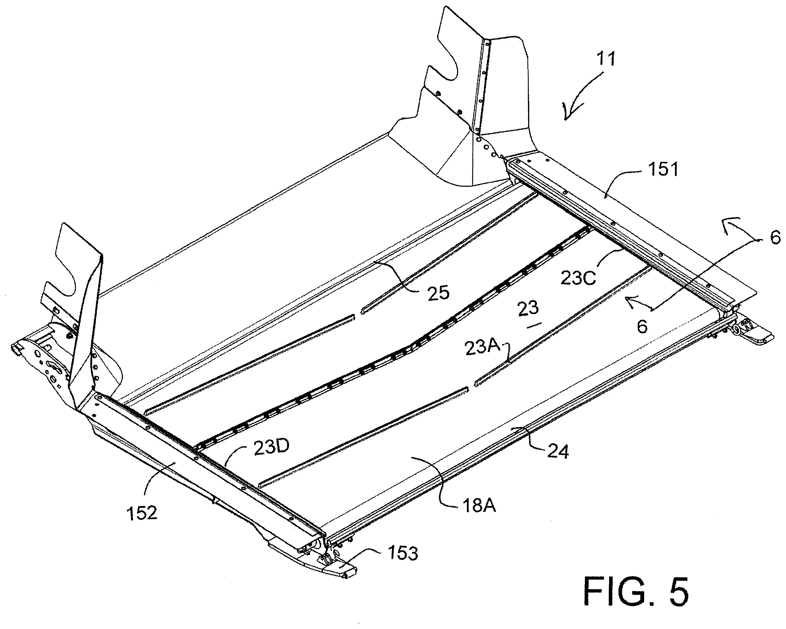

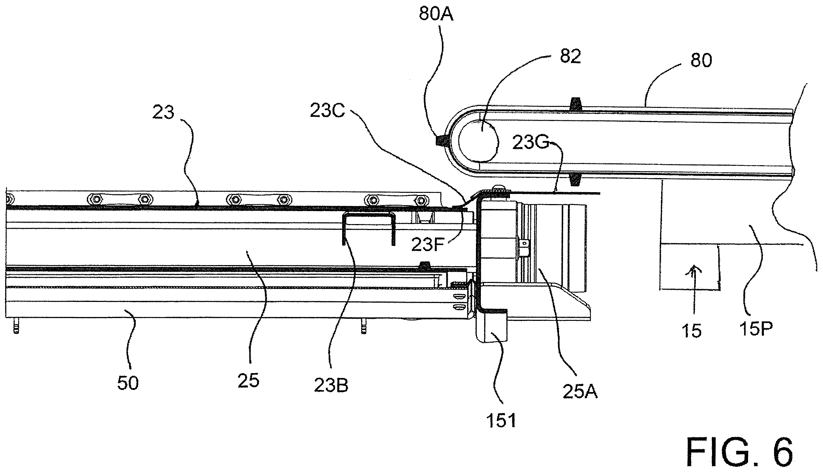

As shown Figures 5 and 6, the adapter 11 includes two arms which define frame members mounted at the rear on a structure of the adapter which is attached to the feeder house. The arms 151, 152 are cantilevered forwardly and act to carry the feed draper and its front and rear rollers. The arms each include a mounting portion 153 which connects the forward end of the arm to the cutter bar so that the forward end of the adapter and the front roller move with the cutter bar of the header. The rear roller 25 is driven by a motor 25A carried on the arm 151. The belt 23 includes slats 23A in a chevron formation. The belt 23 is supported underneath by a skid plate 23B.

In order to reduce crop loss, the edges of the belt 23 are sealed relative to the frame members 151, 152 by a pair of edge seals 23D and 23C arranged for engaging a respective side edge of the feed draper belt 23 at or adjacent the edge 23F. Each seal comprises a strip 23G of a flexible material extending from the adjacent frame member to a position in engagement with the upper surface of the feed draper 23 at side edge or more typically slightly inboard of the adjacent side edge 23F.

The strip 23G passes under a mounting member on the adjacent frame member in the form of a metal strip or bracket 23H bolted down onto the top of the frame member by bolts 23J. The elongate metal strip 23G extends the length of the adjacent frame member and includes a main flat body 23K and an outer side portion 23L that is angled downwardly toward the upper surface of the draper canvas to bias the edge of the flexible strip into engagement with the upper conveyor surface of the draper canvas. In this way the strip 23C is biased by the mounting member into an interference connection with the draper belt so as to follow sagging of the edge of the draper belt by flexing and into substantially continuous engagement with the upper conveyor surface of the feed draper canvas during movement.

The flexible strip 23C conveniently comprises a flexible rubber coated fabric substrate substantially similar to the rubber coated fabric substrate of the draper canvas which is cut to form a rectangular strip which has a first side edge 23M and a second side edge 23N, with the first side edge being oriented substantially parallel to the direction of movement of the feed draper.

A portion 23G of the flexible strip 23C extends beyond the mounting strip 23H across a surface of the frame member 151 and beyond that frame member to the far edge 23N which acts as a seed saver to catch any seed escaping from the crop over the edge of the feed draper and over the seal.

Since various modifications can be made in my invention as herein above described, and many apparently widely different embodiments of same made within the spirit and scope of the claims without department from such spirit and scope, it is intended that all matter contained in the accompanying specification shall be interpreted as illustrative only and not in a limiting sense.

## Claims

1. A header for a crop harvesting machine comprising:
a main frame structure extending across a width of the header for movement in a forward direction generally at right angles to the width across ground including a crop to be harvested;
a mounting assembly for carrying the main frame structure on the crop harvesting machine;
a cutter bar arranged to move over the ground in a cutting action and carrying a cutter knife operable for cutting the crop as the header is moved forwardly across the ground for depositing the crop onto the table;
two side drapers each including a draper belt mounted on rollers generally parallel to the forward direction so that the an upper run of the draper belt carries the crop transverse to the forward direction to a discharge end of the draper belt, with the draper belt having a front edge adjacent the cutter bar and a rear edge;
a feed draper including a feed draper belt, a front roller behind the cutter bar and parallel thereto and a rear roller spaced rearwardly from the front roller so that crop discharged from the discharge end of the side drapers falls onto the feed draper to be carried rearwardly;
the feed draper belt having two side edges each adjacent a respective one of the side drapers;
and a pair of edge seals for engaging a respective side edge of the feed draper belt each comprising a strip of a flexible material extending from a respective frame member adjacent the respective side edge to a position in engagement with the feed draper at or adjacent the side edge.

2. The header according to claim 1 wherein the strip is distorted by an interference connection with the draper belt so as to follow sagging of the edge of the draper belt by flexing.

3. The header according to any preceding claim wherein the strip is carried by a mounting member on the adjacent frame member and is biased by the mounting member into an interference connection with the draper belt.

4. The header according to any preceding claim wherein the flexible strip comprises a flexible rubber coated fabric substrate substantially similar to the rubber coated fabric substrate of the draper canvas.

5. The header according to any preceding claim wherein the flexible strip has a first side edge and a second side edge, said first side edge being oriented substantially parallel to the direction of movement of the feed draper.

6. The header according to any preceding claim wherein the flexible strip is mounted on the adjacent frame member by a bracket mounted on the frame member, the bracket configured to secure the side edge of the flexible strip.

7. The header according to claim 6 wherein the bracket extends toward the feed draper and is configured and operable such that the side edge of the flexible strip is biased by the bracket into substantially continuous engagement with said upper conveyor surface of the feed draper canvas during movement.

8. The header according to claim 6 or 7 wherein the bracket comprises an elongate metal bracket that extends the length of the adjacent frame member.

9. The header according to claim 6, 7 or 8 wherein the bracket is configured to secure the side edge of the flexible strip with a plurality of bolts.

10. The header according to any one of claim 6 to 9 wherein the bracket comprises an inner side portion that is configured to engage and be secured to the frame member, and an outer side portion that is angled downwardly toward the upper surface of the draper canvas to bias the edge of the flexible strip into engagement with the upper conveyor surface of the draper canvas.

11. The header according to any preceding claim wherein the frame member is supported at a fixed distance from draper edge.

12. The header according to any preceding claim wherein the feed draper can move relative to a frame of the header with the side drapers carried thereon and wherein the frame member is mounted for common movement with the draper edge.

13. The header according to any preceding claim wherein the frame member is mounted separately from the side drapers so that there is relative movement therebetween.

14. The header according to any preceding claim wherein the side drapers attached to header for movement therewith and the rear roller of the feed draper and the frame members are attached to the harvesting machine for movement therewith so that relative movement of the header and the machine causes relative movement of the feed draper and side drapers.

15. The header according to any preceding claim wherein a portion of the flexible strip extends beyond the mounting across a surface of the frame member.
